# EUROPEAN PATENT APPLICATION

(11) **EP 2 874 365 A1**
(43) Date of publication of application: **20.05.2015**
(21) Application number: 13816001.5
(22) Date of filing: 28.04.2013
(51) Int. Cl.: H04L 27/26

(54) **DATA TRANSMISSION METHOD AND SYSTEM**

(30) Priority: 11.07.2012 CN 201210239152
(71) Applicant: Huawei Technologies Co., Ltd., Longgang District Shenzhen, Guangdong 518129 (CN)
(72) Inventor: LIU, Yun, Shenzhen Guangdong 518129 (CN)
(74) Representative: Isarpatent
(86) International application number: PCT/CN2013/074947
(87) International publication number: WO 2014/008775

(57) **Abstract**

Disclosed are a data transmission method and system, so as to perform data transmission between a base band unit (BBU) and a remote radio unit (RRU), and especially transmit frequency domain data in a common public radio interface (CPRI). The method in the embodiment of the present invention comprises: a BBU sending to an RRU frequency domain data that undergoes multi-antenna multiple input multiple output (MIMO) coding through a CPRI; the RRU receiving, through the CPRI, the frequency domain data sent by the BBU; and the RRU performing orthogonal frequency division multiplexing (OFDM) symbol generation processing on the frequency domain data received through the CPRI, so as to convert the frequency domain data into time domain data. By adopting the solutions in the embodiments of the present invention, a CPRI rate can be significantly lowered, and a communications system is capable of adjusting a CPRI bandwidth dynamically according to the load and the usage of frequency resources, thereby lowering the CPRI bandwidth.

## Description

This application claims priority to Chinese Patent Application No. 201210239152.8, entitled "DATA TRANSMISSION METHOD AND SYSTEM", filed with the Chinese Patent Office on July 11, 2012, which is incorporated by reference in its entirety herein.

### Technical Field

The present invention relates to the field of wireless communication technology, and particularly to a data transmission method and a data transmission system.

### Background

Distributed base station architecture is widely used in LTE (Long Term Evolution, long term evolution) network. The distributed base station architecture differs from a conventional macro base station, in that a BBU (BaseBand Unit, base band processing unit) is separated from a RRU (Remote Radio Unit, remote radio unit), and the BBU is connected with the RRU via an optical fiber by defining unified CPRI (Common Public Radio Interface, common public radio interface) standard.

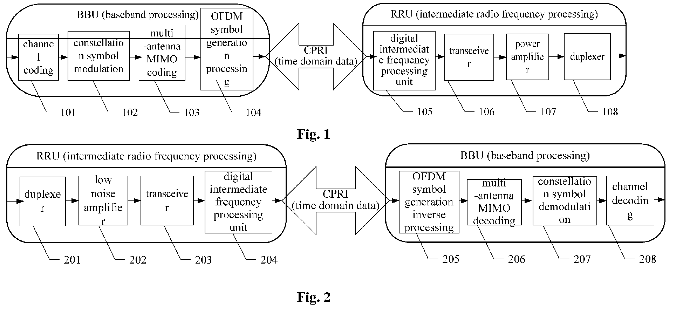

At present, the BBU in the distributed base station architecture is mostly adapted to perform a baseband processing, and the RRU is mostly adapted to perform an intermediate radio frequency processing. In a data transmission process shown in Fig. 1, the BBU firstly performs the baseband processing, and then the RRU performs the intermediate radio frequency processing in a downstream channel. The baseband processing in turn includes: a channel coding 101, a constellation symbol modulation 102, a multi-antenna MIMO (Multiple Input Multiple Output, multiple input multiple output) coding 103 and an OFDM (Orthogonal Frequency Division Multiplexing, orthogonal frequency division multiplexing) symbol generation processing 104. In the intermediate radio frequency processing, data to be processed by following units in turn, which include a digital intermediate frequency processing unit 105, a transceiver 106, a power amplifier 107 and a duplexer 108. In a data transmission process shown in Fig. 2, the RRU firstly performs the intermediate radio frequency processing, and then the BBU performs the baseband processing in an upstream channel. In the intermediate radio frequency processing, data to be processed by following units in turn, which include: a duplexer 201, a low noise amplifier 202, a transceiver 203 and a digital intermediate frequency processing unit 204. The baseband processing in turn includes: an OFDM symbol generation inverse processing 205, multi-antenna MIMO decoding 206, constellation symbol demodulation 207, and channel decoding 208. The digital intermediate frequency processing unit 105 and the digital intermediate frequency processing unit 204 perform a digital intermediate frequency processing. The transceiver 106 performs an up-conversion, a down-conversion and a filter processing. The power amplifier 107 performs power amplification processing. The low noise amplifier 202 performs low noise amplification processing. The duplexer 108 performs a duplexing selection processing.

However, time domain data is fixedly transmitted via the CPRI between the baseband processing and the intermediate radio frequency processing in the forgoing data transmission process. Once a system bandwidth and a sampling rate are determined, a bandwidth of the CPRI is fixed. With the increasing system bandwidth and sampling rate, the bandwidth of the CPRI increases as well.

### Summary

To solve the forgoing problems, embodiments of the invention provide a data transmission method and a data transmission system, which are applied to transmit data between a BBU and an RRU, and specifically applied to transmit frequency domain data through a CPRI. With the embodiments of the invention, a rate of the CPRI can be significantly lowered. Thus, a bandwidth of the CPRI may be dynamically adjusted in a communication system according to a load and a usage of frequency resource, thereby lowering the bandwidth of the CPRI.

A data transmission method, includes:
transmitting, by a baseband processing unit BBU, frequency domain data obtained by performing a multi-antenna multiple input multiple output MIMO coding, to a remote radio unit RRU via a common public radio interface CPRI;
receiving, by the RRU, the frequency domain data transmitted by the BBU, via the CPRI; and
performing, by the RRU, an orthogonal frequency division multiplexing OFDM symbol generation processing on the frequency domain data received via the CPRI, to convert the frequency domain data into time domain data.

A data transmission method, includes:
performing, by a remote radio unit RRU, an orthogonal frequency division multiplexing OFDM symbol generation inverse processing on time domain data obtained by perform a digital intermediate frequency processing, to convert the time domain data into frequency domain data;
transmitting, by the RRU, the frequency domain data obtained by performing the OFDM symbol generation inverse processing, to a baseband processing unit BBU via a common public radio interface CPRI; and
receiving, by the BBU, the frequency domain data transmitted by the RRU, via the CPRI.

A data transmission system, includes: a baseband processing unit BBU and a remote radio unit RRU, and the BBU is connected to the RRU via a common public radio interface CPRI, where
the BBU further includes:
a first transmitting unit, adapted to transmit frequency domain data obtained by performing a multi-antenna multiple input multiple output MIMO coding, to the RRU via the CPRI; and
the RRU further includes:
   a first receiving unit, adapted to receive the frequency domain data transmitted by the BBU, via the CPRI; and
   an OFDM symbol generation unit, adapted to perform an orthogonal frequency division multiplexing OFDM symbol generation processing on the frequency domain data received via the CPRI, to convert the frequency domain data into time domain data.

A data transmission system, includes: a remote radio unit RRU and a baseband processing unit BBU, and the RRU is connected to the BBU via a common public radio interface CPRI, where
the RRU further includes:
an OFDM symbol generation inverse processing unit, adapted to perform an orthogonal frequency division multiplexing OFDM symbol generation inverse processing on time domain data obtained by performing a digital intermediate frequency processing, to convert the time domain data into frequency domain data; and
a second transmitting unit, adapted to transmit the frequency domain data obtained by performing the OFDM symbol generation inverse processing, to the BBU via the CPRI; and
the BBU further includes:
   a second receiving unit, adapted to receive, via the CPRI, the frequency domain data transmitted by the RRU.

It can be seen from the above technical solutions that the embodiments have following advantages.

Instead of the time domain data transmitted fixedly, the frequency domain data is transmitted via the CPRI between the BBU and the RRU, by shifting the OFDM symbol generation processing from the BBU to the RRU. Thus, a rate of the CPRI can be significantly lowered, and a bandwidth of the CPRI can be dynamically adjusted in communication system according to a load and a usage of frequency resource, thereby lowering the bandwidth of the CPRI.

### Brief Description of the Drawings

Fig. 1 is a diagram of a data transmission process in a conventional data transmission method;
Fig. 2 is a diagram of a data transmission process in a conventional data transmission method;
Fig. 3 is a flow chart of a data transmission method according to a first embodiment of the invention;
Fig. 4 is a flow chart of a data transmission method according to a second embodiment of the invention;
Fig. 5 is a diagram of a data transmission process in a data transmission method according to the second embodiment of the invention;
Fig. 6 is a flow chart of a data transmission method according to a third embodiment of the invention;
Fig. 7 is a flow chart of a data transmission method according to a fourth embodiment of the invention;
Fig. 8 is a diagram of a data transmission process in a data transmission method according to the fourth embodiment of the invention;
Fig. 9 is a structure diagram of a data transmission system according to a fifth embodiment of the invention;
Fig. 10 is a structure diagram of a data transmission system according to a sixth embodiment of the invention.

### Detailed Description of Embodiments

In combination with the drawings in the specification, the technical solutions of the invention are clearly and completely described below. Apparently, the described embodiments are not all, but merely a few embodiments of the invention. Based on the embodiments of the invention, all other embodiments obtained by those skilled in the art without any creative work are within the scope of the invention.

Embodiments of the invention provide a data transmission method and a data transmission system, which are applied to transmit data between a BBU and an RRU, and specifically applied to transmit frequency domain data a CPRI. With the embodiments of the invention, a rate of the CPRI can be significantly lowered. Thus, a bandwidth of the CPRI may be dynamically adjusted in a communication system according to a load and a usage of frequency resources, thereby lowering the bandwidth of the CPRI.

Time domain data is fixedly transmitted via a conventional CPRI. Once a system bandwidth and a sampling rate are determined, a bandwidth of the CPRI is fixed. For example, in a LET system, a system bandwidth is 20MHz, the number of antennas is 4, the number of sectors is 3, and thus a bandwidth requirement of the CPRI of the system is 30.72M×16bit×2IQ×4channel×3sector=11.8Gbps. As another example, in a UMTS system, the number of carriers is 4, a system bandwidth is 5MHz, the number of antennas is 2, the number of sectors is 3, and thus a bandwidth requirement of the CPRI of the system is 4×3.84M×16bit×2IQ×2channel×3sector=3.0Gbps. If the LET system and the UMTS system share a station, the bandwidth requirement of the CPRI of the station is about 15Gbps.

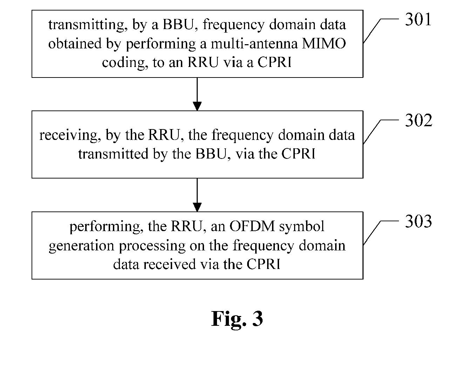

A data transmission method is described in detail according to a first embodiment of the invention. A specific process of the data transmission method according to the embodiment is shown in Fig. 3, which includes:
301 may include: transmitting, by a BBU, frequency domain data obtained by performing a multi-antenna MIMO coding, to an RRU via a CPRI.

In an existing technology, instead of being transmitted from the BBU to the RRU via the CPRI, the frequency domain data obtained by performing the multi-antenna MIMO coding remain inside the BBU, to perform an OFDM symbol generation processing. That is, the BBU performs the OFDM symbol generation processing.

In this step, the BBU transmits the frequency domain data obtained by performing the multi-antenna MIMO coding, to the RRU via the CPRI. That is, the RRU will perform the OFDM symbol generation processing.

302 includes: receiving, by the RRU, the frequency domain data transmitted by the BBU, via the CPRI.

In an existing technology, the BBU transmits time domain data obtained by performing an OFDM symbol generation processing, to the RRU via the CPRI. That is, the time domain data are transmitted via the CPRI.

In this step, the RRU receives, via the CPRI, the frequency domain data transmitted by the BBU. The data obtained by performing the multi-antenna MIMO coding are still the frequency domain data. That is, the frequency domain data are transmitted via the CPRI.

The bandwidth of the CPRI may be dynamically adjusted in the communication system according to the load and the usage of frequency resources by transmitting the frequency domain data via the CPRI, instead of a fixed CPRI bandwidth to be allocated to transmit time domain data in an existing technology.

303 includes: performing, the RRU, an OFDM symbol generation processing on the frequency domain data received via the CPRI.

In an existing technology, the BBU performs the OFDM symbol generation processing in baseband processing, where the OFDM symbol generation processing includes: frequency domain resource mapping processing, IFFT (Inverse Fast Fourier Transform, inverse fast fourier transform) and CP (Cyclic Prefix, cyclic prefix) attachment processing.

In this step, the RRU performs the OFDM symbol generation processing on the frequency domain data received via the CPRI, to convert the frequency domain data transmitted via the CPRI into time domain data.

In the embodiment, instead of the time domain data transmitted fixedly, the frequency domain data is transmitted via the CPRI between the BBU and the RRU, by shifting the OFDM symbol generation processing from the BBU to the RRU. Thus, a rate of the CPRI can be significantly lowered, and a bandwidth of the CPRI can be dynamically adjusted in a communication system according to the load and the usage of frequency resources, thereby lowering the bandwidth of the CPRI.

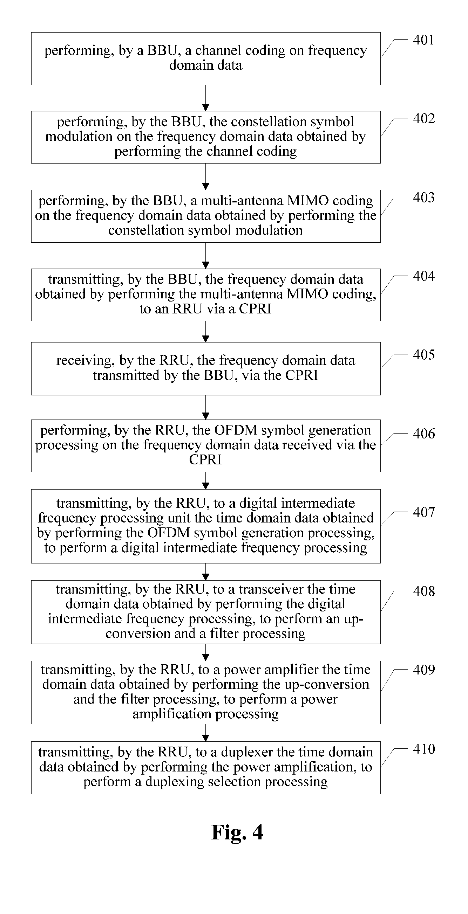

A supplementary description for the data transmission method according to the first embodiment is provided in a second embodiment. Special processes of the data transmission method according the second embodiment are shown in Fig. 4, which include following steps.

401 includes: performing, by a BBU, a channel coding on frequency domain data.

In an existing technology, a BBU is mostly adapted to perform a baseband processing. The base band processing may include: the channel coding, a constellation symbol modulation, a multi-antenna MIMO coding and an OFDM symbol generation. An RRU is mostly adapted to perform an intermediate radio frequency processing. The intermediate radio frequency processing includes: digital intermediate frequency processing performed by a digital intermediate frequency processing unit, an up-conversion and a filter processing performed by a transceiver, a power amplification processing performed by a power amplifier, and a duplexing selection processing performed by a duplexer. The process of transmitting data by the communication system according to the embodiment of the invention is shown in Fig. 1, which includes the foregoing baseband processing and the intermediate radio frequency processing.

In this step, the BBU performs the channel coding on the frequency domain data. The data obtained by performing the channel coding are still frequency domain data. The channel coding includes: transport block CRC (Cyclic Redundancy Check, cyclic redundancy check) attachment, code block segmentation, code block CRC attachment, code interleaving, rate matching, code block concatenation and bit scrambling. Operations performed in this step are the same as those in an existing technology, which will be omitted herein.

402 includes: performing, by the BBU, the constellation symbol modulation on the frequency domain data obtained by performing the channel coding.

In this step, the BBU performs the constellation symbol modulation on the frequency domain data obtained by performing the channel coding. The data obtained by the constellation symbol modulation are still frequency domain data. The constellation symbol modulation includes: bit to constellation symbol mapping processing. Operation performed in this step is the same as that in an existing technology, which will be omitted herein.

403 includes: performing, by the BBU, a multi-antenna MIMO coding on the frequency domain data obtained by performing the constellation symbol modulation.

In the step, the BBU performs the multi-antenna MIMO coding on the frequency domain data obtained by performing the constellation symbol modulation. The data obtained by performing the multi-antenna MIMO coding are still frequency domain data. The multi-antenna MIMO coding includes: space layer mapping, precoding or Beam-forming (beam-forming). Operations performed in this step are the same as those in an existing technology, which will be omitted herein.

404 includes: transmitting, by the BBU, the frequency domain data obtained by performing the multi-antenna MIMO coding, to an RRU via a CPRI.

In an existing technology, instead of being transmitted from the BBU to the RRU via the CPRI, the frequency domain data obtained by performing the multi-antenna MIMO coding remain inside the BBU, to undergo an OFDM symbol generation processing. That is, the OFDM symbol generation processing is performed by the BBU.

In this step, the BBU transmits the frequency domain data obtained by performing the multi-antenna MIMO coding, to the RRU via the CPRI. That is, the OFDM symbol generation processing is performed by the RRU.

405 includes: receiving, by the RRU, the frequency domain data transmitted by the BBU, via the CPRI.

In an existing technology, the BBU transmits time domain data obtained by performing an OFDM symbol generation processing, to the RRU via the CPRI. That is, the time domain data are transmitted via the CPRI.

In this step, the RRU receives, via the CPRI, the frequency domain data transmitted by the BBU. The data obtained by performing the multi-antenna MIMO coding are still frequency domain data. That is, frequency domain data are transmitted via the CPRI.

The bandwidth of the CPRI may be dynamically adjusted in the communication system according to the load and the usage of frequency resources by transmitting the frequency domain data via the CPRI, instead of a fixed CPRI bandwidth to be allocated to transmit time domain data in an existing technology.

406 includes: performing, by the RRU, the OFDM symbol generation processing on the frequency domain data received via the CPRI.

In an existing technology, the BBU performs the OFDM symbol generation processing in the baseband processing. The OFDM symbol generation processing includes: frequency domain resource mapping processing, IFFT and CP attachment processing.

In this step, the RRU performs the OFDM symbol generation processing on the frequency domain data received via the CPRI, to convert the frequency domain data transmitted via the CPRI into time domain data.

Instead of the time domain data transmitted fixedly, the frequency domain data is transmitted via the CPRI between the BBU and the RRU, by shifting the OFDM symbol generation processing from the BBU to the RRU. The bandwidth of the CPRI may be dynamically adjusted in a communication system according to the load and the usage of frequency resources, thereby lowering the bandwidth of the CPRI.

407 includes: transmitting, by the RRU, to a digital intermediate frequency processing unit the time domain data obtained by performing the OFDM symbol generation processing, to perform a digital intermediate frequency processing.

In the step, the RRU performs the digital intermediate frequency processing on the time domain data obtained by performing the OFDM symbol generation processing. The data obtained by the digital intermediate frequency processing are still time domain data. Operations performed in this step are the same as those in an existing technology, which will be omitted herein.

408 includes: transmitting, by the RRU, to a transceiver the time domain data obtained by performing the digital intermediate frequency processing, to perform an up-conversion and a filter processing.

In this step, the RRU performs the up-conversion and the filter processing on the time domain data obtained by performing the digital intermediate frequency processing. The transceiver may convert the time domain data in an intermediate frequency signal into time domain data in a radio frequency signal. The data processed by the transceiver are still time domain data. Operations performed in this step are the same as those in an existing technology, which will be omitted herein.

409 includes: transmitting, by the RRU, to a power amplifier the time domain data obtained by performing the up-conversion and the filter processing, to perform a power amplification processing.

In this step, the RRU performs the power amplification processing on the time domain data obtained by performing the up-conversion and the filter processing. The data by performing the power amplification processing are still time domain data in a radio frequency signal. Operations performed in this step are the same as those in an existing technology, which will be omitted herein.

410 includes: transmitting, by the RRU, to a duplexer the time domain data obtained by performing the power amplification processing, to perform a duplexing selection processing.

In this step, the RRU performs the duplexing selection processing on the time domain data obtained by performing the power amplification processing. The data obtained by performing the duplexing selection processing are still time domain data in the radio frequency signal. Finally, the RRU sends out the time domain data in the radio frequency signal via an antenna.

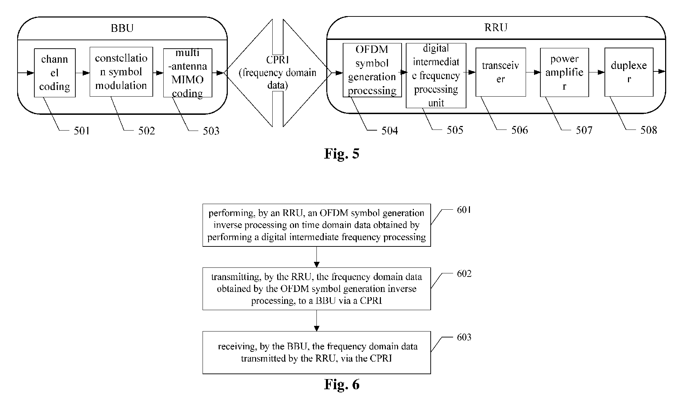

In an embodiment, a diagram of a data transmission process corresponding to the data transmission method in the embodiment is shown in Fig. 5. The data transmission process includes: a channel coding 501, a constellation symbol demodulation 502, and a multi-antenna MIMO coding 503, which are performed by a BBU; and an OFDM symbol generation processing 504 performed by an RRU, a digital intermediate frequency processing specifically performed by a digital intermediate frequency processing unit 505, an up-conversion and a filter processing specifically performed by a transceiver 506, a power amplification processing specifically performed by a power amplifier 507, and a duplexing selection processing specifically performed by a duplexer 508. Instead of the time domain data transmitted fixedly, the frequency domain data is transmitted via the CPRI between the BBU and the RRU, by shifting the OFDM symbol generation processing 504 from the BBU to the RRU. A rate of the CPRI can be significantly lowered, and a bandwidth of the CPRI may be dynamically adjusted in a communication system according to the load and the usage of frequency resources, thereby lowering the bandwidth of the CPRI. For example, in a LET system, a system bandwidth is 20 MHz, the number of antennas is 4 the number of sectors is 3, and thus a bandwidth requirement of the CPRI of the system is 30.72M×16bit×2IQ×4channel×3sector=11.8Gbps according to an existing technology. It is assumed that the maximum number of sub-carriers of the system is 1200, then the bandwidth requirement of the CPRI of the system is 1200subcarrier×14symbol×16bitx2IQ×4channel×3sector/lms=6.5Gbps according to the solutions of the invention. In a condition of 100% peak load and 100% usage of frequency resource, the bandwidth of the CPRI according to the solution of the invention is 6.5Gbps/11.8Gbps=55% of that according to the existing technology. In a condition of 70% average usage of frequency resource, the bandwidth of the CPRI according to the solution of the invention is 38% of that according to the existing technology. In a condition of 50% average usage of frequency resource, the bandwidth of the CPRI according to the solution of the invention is 27% of that according to the existing technology.

In a network, loads in different formats and different cells are generally uneven. A case in which all cells has peak loads is a rare event. Therefore, when the load of the CPRI of a cell is low, the cell may shared the bandwidth of the CPRI thereof with other cells, and thus a bandwidth sharing among different cells or different cells in different formats (such as a station sharing among GSM, UMTS and LTE) is achieved, which is equivalent to establishing a CPRI bandwidth pool. Therefore, the bandwidth of the CPRI is not necessary to be allocated for each cell according to the peak load thereof in an establishment of a network, and thus a hardware investment of transmission devices deployed for the network is saved.

A third embodiment of the invention provides a description of a data transmission method in detail. Special processes of the data transmission method described according to the embodiment are shown in Fig. 6, which include following steps.

601 includes: performing, by an RRU, an OFDM symbol generation inverse processing on time domain data obtained by performing a digital intermediate frequency processing.

In an existing technology, a BBU performs the OFDM symbol generation inverse processing in a baseband processing. The OFDM symbol generation inverse processing includes: a process for removing CP, FFT (Fast Fourier Transform, fast fourier transform), and a frequency domain resource demapping processing.

In this step, the RRU performs the OFDM symbol generation inverse processing on the time domain data obtained by performing the digital intermediate frequency processing, to convert the time domain data into frequency domain data.

602 includes: transmitting, by the RRU, the frequency domain data obtained by the OFDM symbol generation inverse processing, to a BBU via a CPRI.

In an existing technology, an RRU does not transmit the frequency domain data obtained by performing the OFDM symbol generation inverse processing, to the BBU via the CPRI. Instead, the BBU performs the OFDM symbol generation inverse processing; and the frequency domain data obtained by performing the OFDM symbol generation inverse processing remain inside the BBU, to undergo a multi-antenna MIMO coding.

In this step, the RRU transmits the frequency domain data obtained by performing the OFDM symbol generation inverse processing, to the BBU via the CPRI. That is, the RRU performs the OFDM symbol generation inverse processing.

603 includes: receiving, by the BBU, the frequency domain data transmitted by the RRU, via the CPRI.

In an existing technology, the RRU transmits the time domain data to the BBU via a CPRI. That is, the time domain data are transmitted via the CPRI.

In this step, the BBU receives the frequency domain data transmitted by the RRU, via the CPRI. The data obtained by performing the OFDM symbol generation inverse processing are frequency domain data. That is, in this step, the frequency domain data are transmitted via the CPRI.

The bandwidth of the CPRI may be dynamically adjusted in a communication system according to the load and the usage of frequency resources by transmitting the frequency domain data via the CPRI, instead of a fixed CPRI bandwidth to be allocated to transmit time domain data in an existing technology.

In the embodiment, instead of the time domain data transmitted fixedly, the frequency domain data is transmitted via the CPRI between the BBU and the RRU, by shifting the OFDM symbol generation inverse processing from the BBU to the RRU. Thus, a rate of the CPRI can be significantly lowered, and a bandwidth of the CPRI can be dynamically adjusted in a communication system according to the load and the usage of frequency resources, thereby lowering the CPRI bandwidth.

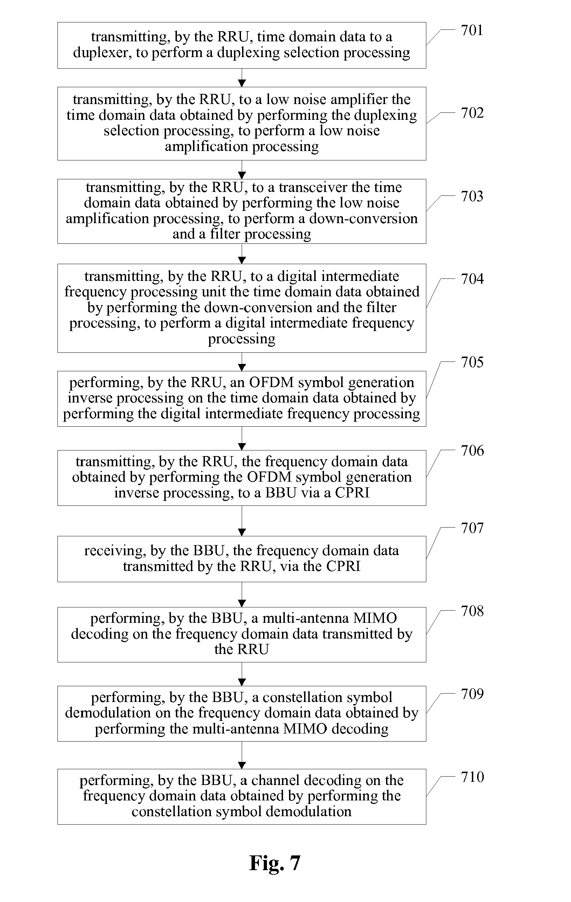

A fourth embodiment of the invention provides a supplementary description of the data transmission method according to the third embodiment. Special processes of the data transmission method according the fourth embodiment are shown in Fig. 7, which include following steps.

701 includes: transmitting, by the RRU, time domain data to a duplexer, to perform a duplexing selection processing.

In this step, the RRU performs the duplexing selection processing to the time domain data. The data obtained by performing the duplexing selection processing are still time domain data. Operations performed in this step are the same as those in an existing technology, which will be omitted herein.

702 includes: transmitting, by the RRU, to a low noise amplifier the time domain data obtained by performing the duplexing selection processing, to perform a low noise amplification processing.

In this step, the RRU performs the low noise amplification processing on the time domain data obtained by performing the duplexing selection processing. The data obtained by performing the low noise amplification processing are still time domain data. Operations performed in this step are the same as those in an existing technology, which will be omitted herein.

703 includes: transmitting, by the RRU, to a transceiver the time domain data obtained by performing the low noise amplification processing, to perform a down-conversion and a filter processing.

In this step, the RRU performs the down-conversion and the filter processing on the time domain data obtained by performing the low noise amplification processing. The transceiver converts the time domain data in a radio frequency signal into time domain data in an intermediate frequency signal. The data processed by the transceiver are still time domain data. Operations performed in this step are the same as those in an existing technology, which will be omitted herein.

704 includes: transmitting, by the RRU, to a digital intermediate frequency processing unit the time domain data obtained by performing the down-conversion and the filter processing, to perform a digital intermediate frequency processing.

In this step, the RRU performs the digital intermediate frequency processing on the time domain data obtained by performing the down-conversion and the filter processing. The data obtained by performing the digital intermediate frequency processing are still time domain data. Operations performed in this step are the same as those in an existing technology, which will be omitted herein.

705 includes: performing, by the RRU, an OFDM symbol generation inverse processing on the time domain data obtained by performing the digital intermediate frequency processing.

In an existing technology, the BBU performs the OFDM symbol generation inverse processing in a baseband processing. The OFDM symbol generation inverse processing includes: a process for removing CP, FFT and a frequency domain resource demapping processing.

In this step, the RRU performs the OFDM symbol generation inverse processing on the time domain data obtained by performing the digital intermediate frequency processing, to convert the time frequency data into frequency domain data.

706 includes: transmitting, by the RRU, the frequency domain data obtained by performing the OFDM symbol generation inverse processing, to a BBU via a CPRI.

In an existing technology, the RRU does not transmit the frequency domain data obtained by performing the OFDM symbol generation inverse processing, to the BBU via the CPRI. Instead, the BBU performs the OFDM symbol generation inverse processing. The frequency domain data obtained by performing the OFDM symbol generation inverse processing remain inside the BBU, to undergo a multi-antenna MIMO decoding processing.

In this step, the RRU transmits the frequency domain data obtained by performing the OFDM symbol generation inverse processing, to the BBU via the CPRI. That is, the RRU performs the OFDM symbol generation inverse processing.

707 includes: receiving, by the BBU, the frequency domain data transmitted by the RRU, via the CPRI.

In an existing technology, the RRU transmits the time domain data to the BBU via the CPRI. That is, the time domain data are transmitted via the CPRI.

In this step, the BBU receives the frequency domain data transmitted by the RRU, via the CPRI. The data obtained by performing the OFDM symbol generation inverse processing are frequency domain data. That is, in this step, the frequency domain data are transmitted via the CPRI.

The bandwidth of the CPRI may be dynamically adjusted in a communication system according to the load and the usage of frequency resources by transmitting the frequency domain data via the CPRI, instead of a fixed CPRI bandwidth to be allocated to transmit time domain data in an existing technology.

708 includes: performing, by the BBU, a multi-antenna MIMO decoding on the frequency domain data transmitted by the RRU.

In the step, the BBU performs the multi-antenna MIMO decoding on the frequency domain data transmitted by the RRU. The data obtained by performing the multi-antenna MIMO decoding are still frequency domain data. The multi-antenna MIMO decoding includes: channel equalization and a process for merging a multi-antenna signal. Operations performed in this step are the same as those in an existing technology, which will be omitted herein.

709 includes: performing, by the BBU, a constellation symbol demodulation on the frequency domain data obtained by performing the multi-antenna MIMO decoding.

In the step, the BBU performs the constellation symbol demodulation on the frequency domain data obtained by performing the multi-antenna MIMO decoding. The data obtained by performing the constellation symbol demodulation are still frequency domain data. The constellation symbol demodulation includes: a calculation for mapping a constellation symbol to bit soft information. Operations performed in this step are the same as those in an existing technology, which will be omitted herein.

710 includes: performing, by the BBU, a channel decoding on the frequency domain data obtained by performing the constellation symbol demodulation.

In the step, the BBU performs the channel decoding on the frequency domain data obtained by performing the constellation symbol demodulation. The data obtained by performing the channel decoding are still frequency domain data. The channel decoding includes: bit descrambling, rate dematching, decoding deinterleaving, code block CRC, reassembly and transport block CRC. Operations performed in this step are the same as those in an existing technology, which will be omitted herein.

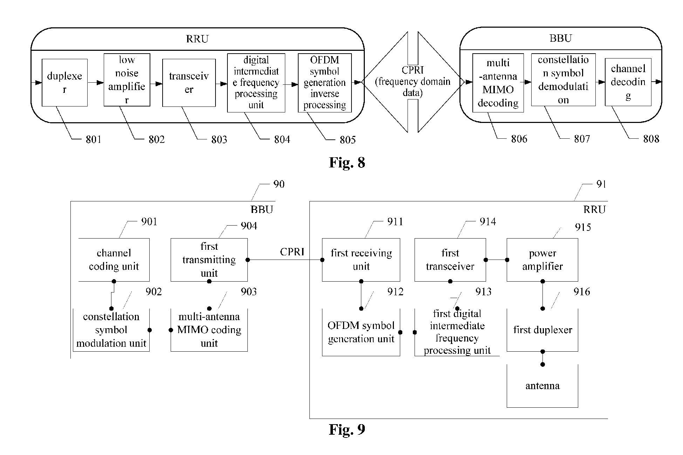

In an embodiment, a diagram of a data transmission process corresponding to the data transmission method according to the embodiment is shown in Fig. 8. The data transmission process including: in an RRU, a duplexing selection processing specifically performed by a duplexer 801, a low noise amplification processing specifically performed by a low noise amplifier 802, a down-conversion and a filter processing specifically performed by a transceiver 803, a digital intermediate frequency processing specifically performed by a digital intermediate frequency processing unit 804, an OFDM symbol generation inverse processing 805; and a multi-antenna MIMO decoding 806, a constellation symbol demodulation 807 and a channel decoding 808, which are performed by the BBU. Instead of the time domain data transmitted fixedly, the frequency domain data is transmitted via the CPRI between the BBU and the RRU, by shifting the OFDM symbol generation processing 804 from the BBU to the RRU. A rate of the CPRI can be significantly lowered, and a bandwidth of the CPRI may be dynamically adjusted in a communication system according to the load and the usage of frequency resources, thereby lowering the bandwidth of the CPRI.

A data transmission system is described in detail according to a fifth embodiment. The system according to the embodiment includes one or more units adapted to implement one or more steps of the foregoing methods. Therefore, the description of steps in foregoing methods adapts to corresponding units of the system. A structure of the data transmission system according to the embodiment is shown in Fig. 9, which includes:
a baseband processing unit BBU 90 and a radio remote unit RRU 90, where the BBU 90 is connected to the RRU 91 via a common public radio interface CPRI.

The BBU 90 further includes following units.

A channel coding unit 901 is adapted to perform a channel coding on frequency domain data.

The channel coding unit 901 performs the channel coding on the frequency domain data. The data obtained by performing the channel coding are still frequency domain data. The channel coding includes: transport block CRC attachment, code block segmentation, code block CRC attachment, code interleaving, rate matching, code block concatenation and bit scrambling. Operations performed by the channel coding unit 901 are the same as those in step 401 of the second embodiment, which will be omitted herein.

A constellation symbol modulation unit 902 establishes a communication connection with the channel coding unit 901, and is adapted to perform a constellation symbol modulation on the frequency domain data obtained by performing the channel coding.

The constellation symbol modulation unit 902 performs the constellation symbol modulation on the frequency domain data obtained by performing the channel coding. The data obtained by performing the constellation symbol modulation are still frequency domain data. The constellation symbol modulation includes: bit to constellation symbol mapping processing. Operations performed by the constellation symbol modulation unit 902 are the same as those in step 402 of the second embodiment, which will be omitted herein.

A multi-antenna MIMO coding unit 903 establishes a communication connection with the constellation symbol modulation unit 902, and is adapted to perform a multi-antenna MIMO coding on the frequency domain data obtained by performing the constellation symbol modulation.

The multi-antenna MIMO coding unit 903 performs the multi-antenna MIMO coding on the frequency domain data obtained by performing the constellation symbol modulation. The data obtained by performing the multi-antenna MIMO coding are still frequency domain data. The multi-antenna MIMO coding includes: space layer mapping, precoding or beam-forming. Operations performed by the multi-antenna MIMO coding unit 903 are the same as those in step 403 of the second embodiment, which will be omitted herein.

A first transmitting unit 904 establishes a communication connection with the multi-antenna MIMO coding unit 903, is adapted to transmit the frequency domain data obtained by performing the multi-antenna MIMO coding, to the RRU via the CPRI.

In an existing technology, a BBU does not transmit frequency domain data obtained by performing the multi-antenna MIMO coding to the RRU via the CPRI. Instead, the frequency domain data obtained by performing the multi-antenna MIMO coding remain inside the BBU, to undergo an OFDM symbol generation processing. That is, the BBU performs the OFDM symbol generation processing.

In the system according to the embodiment, the first transmitting unit 904 transmits the frequency domain data obtained by performing the multi-antenna MIMO coding, to the RRU 91 via the CPRI. That is, the RRU 91 performs the OFDM symbol generation processing.

The RRU 91 further includes following units.

A first receiving unit 911 is adapted to receive the frequency domain data transmitted by the BBU, via the CPRI.

In an existing technology, the BBU transmits time domain data obtained by performing the OFDM symbol generation processing, to the RRU via the CPRI. The time domain data are transmitted via the CPRI.

In the system according to the embodiment, the first receiving unit 911 receives the frequency domain data transmitted by the BBU 90, via the CPRI. The data obtained by performing the multi-antenna MIMO coding are still frequency domain data. That is, the frequency domain data are transmitted via the CPRI.

The bandwidth of the CPRI may be dynamically adjusted according to the load and the usage of frequency resources by transmitting the frequency domain data via the CPRI, instead of a fixed CPRI bandwidth to be allocated to transmit time domain data in an existing technology.

An OFDM symbol generation unit 912 establishes a communication connection with the first receiving unit 911, and is adapted to perform an orthogonal frequency division multiplexing OFDM symbol generation processing on the frequency domain data received via the CPRI, to convert the frequency domain data into time domain data.

In an existing technology, the BBU performs the OFDM symbol generation processing in the baseband processing. The OFDM symbol generation processing includes: frequency domain resource mapping, IFFT and CP attachment.

In the system according to the embodiment, the OFDM symbol generation unit 912 performs the OFDM symbol generation processing on the frequency domain data received via the CPRI, to convert the frequency domain data transmitted via the CPRI into the time domain data.

Instead of the time domain data transmitted fixedly, the frequency domain data is transmitted via the CPRI between the BBU and the RRU, by shifting the OFDM symbol generation processing from the BBU to the RRU. The bandwidth of the CPRI may be dynamically adjusted in a communication system according to the load and the usage of frequency resources, thereby lowering the bandwidth of the CPRI.

A first digital intermediate frequency processing unit 913 establishes a communication connection with the OFDM symbol generation unit 912, and is adapted to receive the time domain data obtained by performing OFDM symbol generation processing, to perform a digital intermediate frequency processing.

The first digital intermediate frequency processing unit 913 performs the digital intermediate frequency processing on the time domain data obtained by performing the OFDM symbol generation processing. The data obtained by performing the digital intermediate frequency processing are still time domain data. Operations performed by the first digital intermediate frequency processing unit 913 are the same as those in step 407 of the second embodiment, which will be omitted herein.

The first transceiver 914 establishes a communication connection with the first digital intermediate frequency processing unit 913, and is adapted to receive the time domain data obtained by performing the digital intermediate frequency processing, to perform an up-conversion and a filter processing.

The first transceiver 914 performs the up-conversion and the filter processing on the time domain data obtained by performing the digital intermediate frequency processing, and the transceiver 914 converts the time domain data in an intermediate frequency signal into time domain data in a radio frequency signal. The data processed by the first transceiver 914 are still time domain data. Operations performed by the first transceiver 914 are the same as those in step 408 of the second embodiment, which will be omitted herein.

The power amplifier 915 establishes a communication connection with the first transceiver 914, and is adapted to receive the time domain data obtained by performing the up-conversion and the filter processing, to perform a power amplification processing.

The power amplifier 915 performs the power amplification processing on the time domain data obtained by performing the up-conversion and the filter processing. The data obtained by performing the power amplification processing are still time domain data in a radio frequency signal. Operations performed by the power amplifier 915 are the same as those in step 409 of the second embodiment, which will be omitted herein.

A first duplexer 916 establishes a communication connection with the power amplifier 915, and is adapted to receive the time domain data obtained by performing, the power amplification processing, to perform a duplexing selection processing.

The first duplexer 916 performs the duplexing selection processing on the time domain data obtained by performing the power amplification processing. The data obtained by performing the duplexing selection processing are still time domain data in a radio frequency signal. Finally, the RRU sends out the time domain data in the radio frequency signal via an antenna.

In the embodiment, instead of the time domain data transmitted fixedly, the frequency domain data is transmitted via the CPRI between the BBU 90 and the RRU 91, by shifting the OFDM symbol generation unit 912 from the BBU 90 to the RRU 91. A rate of the CPRI can be significantly lowered, and a bandwidth of the CPRI may be dynamically adjusted in a communication system according to the load and the usage of frequency resources, thereby lowering the bandwidth of the CPRI.

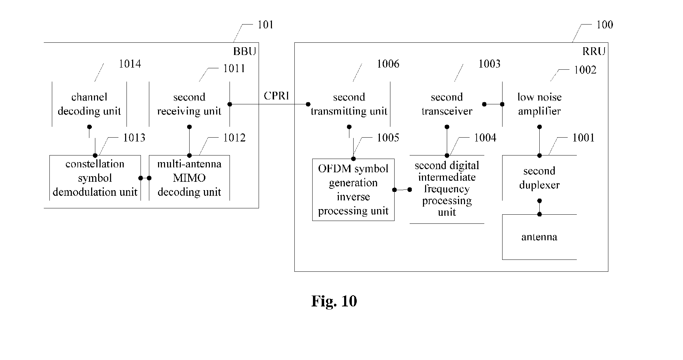

A data transmission system will be described in detail according to a sixth embodiment of the invention. The system according to the embodiment includes one or more units for implementing one or more steps of the foregoing methods. Therefore, the description of steps in foregoing methods adapts to corresponding units of the system. A structure of the data transmission system according to the embodiment is shown in Fig. 10, which includes:
a radio remote unit RRU 100 and a baseband processing unit BBU 101, where the RRU 100 is connected to the BBU 101 via a common public radio interface CPRI.

The RRU 100 further includes following units.

A second duplexer 1001 is adapted to receive time domain data to perform a duplexing selection processing. The operation performed by the second duplexer 1001 is an inverse operation of the operation performed by the first duplexer 916 in the fifth embodiment. A special description of the operation has been described in the step 701 of the fourth embodiment, which will be omitted herein.

A low noise amplifier 1002 establishes a communication connection with the second duplexer 1001, and is adapted to receive the time domain data obtained by performing the duplexing selection processing, to perform the low noise amplification processing. The operation performed by the low noise amplifier 1002 is an inverse operation of the operation performed by the power amplifier 915 in the fifth embodiment. A special description of the operation has been described in the step 702 of the fourth embodiment, which will be omitted herein.

A second transceiver 1003 establishes a communication connection with the low noise amplifier 1002, and is adapted to receive the time domain data obtained by performing the low noise amplification processing, to perform a down-conversion and a filter processing. The operation performed by the second transceiver 1003 is an inverse operation of the operation performed by the first transceiver 914 in the fifth embodiment. A special description of the operation has been described in the step 703 of the fourth embodiment, which will be omitted herein.

A second digital intermediate frequency processing unit 1004 establishes a communication connection with the second transceiver 1003, and is adapted to receive the time domain data obtained by performing the down-conversion and the filter processing, to perform a digital intermediate frequency processing. The operation performed by the second digital intermediate frequency processing unit 1004 is an inverse operation of the operation performed by the first digital intermediate frequency processing unit 913 in the fifth embodiment. A special description of the operation has been described in the step 704 of the fourth embodiment, which will be omitted herein.

The OFDM symbol generation inverse processing unit 1005 establishes a communication connection with the second digital intermediate frequency processing unit 1004, and is adapted to perform an OFDM symbol generation inverse processing on the time domain data obtained by performing the digital intermediate frequency processing, to convert the time frequency data into frequency domain data. The operation performed by the OFDM symbol generation inverse processing unit 1005 is an inverse operation of the operation performed by the OFDM symbol generation processing unit 912 in the fifth embodiment. A special description of the operation has been described in the step 705 of the fourth embodiment, which will be omitted herein.

A second transmitting unit 1006 establishes a communication connection with the OFDM symbol generation inverse processing unit 1005; and is adapted to transmit the frequency domain data obtained by performing the OFDM symbol generation inverse processing, to the BBU via the CPRI.

The BBU101 further includes following units.

A second receiving unit 1011 is adapted to receive the frequency domain data transmitted by the RRU, via the CPRI.

A multi-antenna MIMO decoding unit 1012 establishes a communication connection with the second receiving unit 1011, and is adapted to perform a multi-antenna MIMO decoding on the frequency domain data transmitted by the RRU. The operation performed by the multi-antenna MIMO decoding unit 1012 is an inverse operation of the operation performed by the multi-antenna MIMO coding unit 903 in the fifth embodiment. A special description of the operation has been described in the step 708 of the fourth embodiment, which will be omitted herein.

A constellation symbol demodulation unit 1013 establishes a communication connection with the multi-antenna MIMO decoding unit 1012, and is adapted to perform a constellation symbol demodulation on the frequency domain data obtained by performing the multi-antenna MIMO decoding. The operation performed by the constellation symbol demodulation unit 1013 is an inverse operation of the operation performed by the constellation symbol modulation unit 902 in the fifth embodiment. A special description of the operation has been described in the step 709 of the fourth embodiment, which will be omitted herein.

A channel decoding unit 1014 establishes a communication connection with the constellation symbol demodulation unit 1013, and is adapted to perform a channel decoding on the frequency domain data obtained by performing the constellation symbol demodulation. The operation performed by the channel decoding unit 1014 is an inverse operation of the operation performed by the channel coding unit 901 in the fifth embodiment. A special description of the operation has been described in the step 710 of the fourth embodiment, which will be omitted herein.

In the embodiment, instead of the time domain data transmitted fixedly, the frequency domain data is transmitted via the CPRI between the BBU 101 and the RRU 100, by shifting the OFDM symbol generation inverse processing unit 1005 from the BBU 101 to the RRU 100. A rate of the CPRI can be significantly lowered, and a bandwidth of the CPRI may be dynamically adjusted in a communication system according to the load and the usage of frequency resources, thereby lowering the CPRI bandwidth.

Those skilled in the art may understand that all or a few steps of the methods in the foregoing embodiments can be implemented by a program instructing relative hardware, and the program may be stored in a computer readable storage medium, where the storage medium may be a read-only memory, a magnetic disk or a optical disk, etc.

A data transmission method and a data transmission system according to the invention are described in detail above. For those skilled in the art, there will be modifications in particular implementation or application range according to the idea of the embodiments of the invention. In summary, the specification should not be construed as a limitation to the invention.

## Claims

1. A data transmission method, comprising:
transmitting, by a baseband processing unit BBU, frequency domain data obtained by performing a multi-antenna multiple input multiple output MIMO coding, to a remote radio unit RRU via a common public radio interface CPRI;
receiving, by the RRU, the frequency domain data transmitted by the BBU, via the CPRI; and
performing, by the RRU, an orthogonal frequency division multiplexing OFDM symbol generation processing on the frequency domain data received via the CPRI, to convert the frequency domain data into time domain data.

2. The method according to claim 1, wherein before transmitting, by the BBU, frequency domain data obtained by performing a multi-antenna MIMO coding, to a RRU via a CPRI, the method further comprises:
performing, by the BBU, a channel coding on frequency domain data;
performing, by the BBU, a constellation symbol modulation on the frequency domain data obtained by performing the channel coding; and
performing, by the BBU, the multi-antenna MIMO coding on the frequency domain data obtained by performing the constellation symbol modulation.

3. The method according to claim 1 or 2, wherein after performing, by the RRU, an OFDM symbol generation processing on the frequency domain data transmitted by the BBU, the method further comprises:
transmitting, by the RRU, the time domain data obtained by performing the OFDM symbol generation processing to a digital intermediate frequency processing unit, to perform a digital intermediate frequency processing;
transmitting, by the RRU, to a transceiver the time domain data obtained by performing the digital intermediate frequency processing, to perform an up-conversion and a filter processing;
transmitting, by the RRU, to a power amplifier the time domain data obtained by performing the up-conversion and the filter processing, to perform a power amplification processing; and
transmitting, by the RRU, to a duplexer the time domain data obtained by performing the power amplification processing, to perform a deplexing selection processing.

4. A data transmission method, comprising:
performing, by a remote radio unit RRU, an orthogonal frequency division multiplexing OFDM symbol generation inverse processing on time domain data obtained by performing a digital intermediate frequency processing, to convert the time domain data into frequency domain data;
transmitting, by the RRU, the frequency domain data obtained by performing the OFDM symbol generation inverse processing, to a baseband processing unit BBU via a common public radio interface CPRI; and
receiving, by the BBU, the frequency domain data transmitted by the RRU, via the CPRI.

5. The method according to claim 4, wherein before performing, by a RRU, an OFDM symbol generation inverse processing on time domain data obtained by performing a digital intermediate frequency processing, the method further comprises:
transmitting, by the RRU, time domain data to a duplexer, to perform a duplexing selection processing;
transmitting, by the RRU, to a low noise amplifier the time domain data obtained by performing the duplexing selection processing, to perform a low noise amplification processing;
transmitting, by the RRU, to a transceiver the time domain data obtained by performing the low noise amplification processing, to perform a down-conversion and a filter processing; and
transmitting, by the RRU, the time domain data obtained by the down-conversion and the filter processing to a digital intermediate frequency processing unit, to perform a digital intermediate frequency processing.

6. The method according to claim 4 or 5, wherein after receiving, by the BBU, the frequency domain data transmitted by the RRU, via the CPRI, the method further comprises:
performing, by the BBU, a multi-antenna MIMO decoding on the frequency domain data transmitted by the RRU;
performing, by the BBU, a constellation symbol demodulation on the frequency domain data obtained by performing the multi-antenna MIMO decoding; and
performing, by the BBU, a channel decoding on the frequency domain data obtained by performing the constellation symbol demodulation.

7. A data transmission system, comprising: a baseband processing unit BBU and a remote radio unit RRU, wherein the BBU is connected to the RRU via a common public radio interface CPRI, and wherein
the BBU further comprises:
a first transmitting unit, adapted to transmit frequency domain data obtained by performing a multi-antenna multiple input multiple output MIMO coding, to the RRU via the CPRI; and
the RRU further comprises:
a first receiving unit, adapted to receive the frequency domain data transmitted by the BBU via the CPRI; and
an OFDM symbol generation unit, adapted to perform an orthogonal frequency division multiplexing OFDM symbol generation processing on the frequency domain data received via the CPRI, to convert the frequency domain data into time domain data.

8. The system according to claim 7, wherein the BBU further comprises:
a channel coding unit, adapted to perform a channel coding on frequency domain data;
a constellation symbol modulation unit, adapted to perform a constellation symbol modulation on the frequency domain data obtained by performing the channel coding; and
a multi-antenna MIMO coding unit, adapted to perform a multi-antenna MIMO coding on the frequency domain data obtained by performing the constellation symbol modulation.

9. The system according to claim 7 or 8, wherein the RRU further comprises:
a first digital intermediate frequency processing unit, adapted to receive the time domain data obtained by performing the OFDM symbol generation processing, to perform a digital intermediate frequency processing;
a first transceiver, adapted to receive the time domain data obtained by performing the digital intermediate frequency processing, to perform an up-conversion and a filter processing;
a power amplifier, adapted to receive the time domain data obtained by performing the up-conversion and the filter processing, to perform a power amplification processing; and
a first duplexer, adapted to receive the time domain data obtained by performing the power amplification processing, to perform a duplexing selection processing.

10. A data transmission system, comprising: a remote radio unit RRU and a baseband processing unit BBU, wherein the RRU is connected to the BBU via a common public radio interface CPRI, and wherein
the RRU further comprises:
an OFDM symbol generation inverse processing unit, adapted to perform an orthogonal frequency division multiplexing OFDM symbol generation inverse processing on time domain data obtained by performing a digital intermediate frequency processing, to convert the time domain data into frequency domain data; and
a second transmitting unit, adapted to transmit the frequency domain data obtained by performing the OFDM symbol generation inverse processing, to the BBU via the CPRI; and
the BBU further comprises:
a second receiving unit, adapted to receive the frequency domain data transmitted by the RRU, via the CPRI.

11. The system according to claim 10, wherein the RRU further comprises:
a second duplexer, adapted to receive time domain data, to perform a duplexing selection processing;
a low noise amplifier, adapted to receive the time domain data obtained by performing the duplexing selection processing, to perform a low noise amplification processing;
a second transceiver, adapted to receive the time domain data obtained by performing the low noise amplification processing, to perform a down-conversion and a filter processing; and
a second digital intermediate frequency processing unit, adapted to receive the time domain data obtained by performing the down-conversion and the filter processing, to perform a digital intermediate frequency processing.

12. The system according to claim 10 or 11, wherein the BBU further comprises:
a multi-antenna MIMO decoding unit, adapted to perform a multi-antenna MIMO decoding on the frequency domain data transmitted by the RRU;
a constellation symbol demodulation unit, adapted to perform a constellation symbol demodulation on the frequency domain data obtained by performing a multi-antenna MIMO decoding; and
a channel decoding unit, adapted to perform a channel decoding on the frequency domain data obtained by performing the constellation symbol demodulation.
